Europäisches Patentamt

European Patent Office

Office européen des brevets

(11) Veröffentlichungsnummer: **0 289 704**
**A1**

# EUROPÄISCHE PATENTANMELDUNG

(21) Anmeldenummer: 88101575.4

(22) Anmeldetag: 04.02.88

(51) Int. Cl.4: **H01M 12/06**

(30) Priorität: 02.05.87 DE 3714652

(43) Veröffentlichungstag der Anmeldung:
09.11.88 Patentblatt 88/45

(84) Benannte Vertragsstaaten:
AT CH DE FR GB LI NL SE

(71) Anmelder: **VARTA Batterie Aktiengesellschaft**
**Am Leineufer 51**
**D-3000 Hannover 21(DE)**

(72) Erfinder: **Costenoble, Ullrich, Dipl.-Ing. (FH)**
**Strutrainstrasse 19**
**D-7095 Rainau(DE)**

(74) Vertreter: **Kaiser, Dieter Ralf, Dipl.-Ing.**
**Gundelhardtstrasse 72**
**D-6233 Kelkheim/Ts.(DE)**

(54) Luftsauerstoffzelle in Knopfform.

(57) Bei einer Luftsauerstoffzelle in Knopfform sind
ein innerer Metallbecher (1), der einen Elektrolyten
und eine negative Elektrode (3) aufnimmt, und ein
äußerer Metallbecher (2), der eine Luftsauerstoffelektrode (7, 8, 9) enthält und der mit Luftzutrittsöffnungen (4) versehen ist, unter Zwischenlage einer isolierenden Dichtung (5) zusammengefügt. Der Rand der
Luftsauerstoffelektrode (7, 8, 9) ist auf einem in den
Becherboden eingelegten und mit dem Becherboden
elektrolytdicht verbundenen Metallring (11) abgestützt. Der Metallring (11) ist auf seiner dem Becherboden zugewandten Seite mit einem weichen Kunststoff (12) beschichtet oder in den Becherboden eingeklebt.

FIG. 1

## Luftsauerstoffzelle in Knopfform

Gegenstand der Erfindung ist eine Luftsauerstoffzelle in Knopfform, bestehend aus einem den Elektrolyten und das negative Elektrodenmaterial aufnehmenden inneren Metallbecher und einem die Luftsauerstoffelektrode enthaltenden äußeren Metallbecher, der mit Luftzutrittsöffnungen versehen ist und die unter Zwischenlage einer isolierenden Dichtung zusammengefügt sind, wobei der Rand der Luftelektrode auf einem in den Becherboden eingelegten und mit dem Becherboden elektrolytdicht verbundenen Ring abgestützt ist.

Metall/Luft-Zellen in Knopfzellenform sind galvanische Elemente mit hoher Energiedichte, die beispielsweise in großem Umfang für Hörgeräte Verwendung finden. Derartige Zellen besitzen einen inneren Metallbecher, der das negative Elektrodenmaterial, im allgemeinen Zink, insbesondere in Form von Zinkpulver, und den Elektrolyten aufnimmt, und einen äußeren Metallbecher, der mit Luftzutrittsöffnungen versehen ist und der eine mehrschichtige Luftsauerstoffelektrode aufnimmt. Die beiden Zellenbecher sind unter Zwischenlage einer isolierenden Dichtung zusammengefügt. Die Luftsauerstoffelektrode besteht im allgemeinen aus einer ein Ableiternetz enthaltenden Schicht eines katalytisch aktiven Materials, beispielsweise Aktivkohle, welche gegebenenfalls mit Katalysatoren wie Silber oder Mangandioxid katalysiert ist und die mit PTFE als Bindemittel gebunden ist sowie einer hydrophoben, porösen Kunststoffschicht, im allgemeinen aus PTFE, die der Gasseite der Zelle zugewandt ist. Diese Luftsauerstoffelektrode kann nicht direkt auf den Zellenboden aufgebracht werden, da sonst kein Luftzutritt zur gesamten Elektrodenoberfläche möglich wäre. Aus diesem Grunde wird bei solchen Zellen vor der Luftsauerstoffelektrode eine Gasverteilungsschicht vorgesehen.

Der Raum für diese Gasverteilungsschicht wird bei bekannten Konstruktionen solcher Zellen beispielsweise gemäß dem deutschen Patent 24 54 890 dadurch geschaffen, daß am Umfang des äußeren Zellenbechers ein Absatz vorgesehen wird, auf dem sich die Luftelektrode abstützt. In diesem Bereich muß die Luftelektrode so auf den Bodenrand des äußeren Zellenbechers gepreßt sein, daß der Elektrolyt nicht zwischen Becherboden und der Luftsauerstoffelektrode durchkriechen kann.

In einer anderen bekannten Luftsauerstoffzelle in Knopfform gemäß der DE-OS 33 14 624 wird die Luftsauerstoffelektrode zwischen einer Sicke im äußeren Zellenbecher und dem Dichtungsfuß fest eingespannt.

Es hat sich allerdings gezeigt, daß ein stufenförmiger Absatz, bei dem eine ringförmige, flächige Pressung erfolgt, höhere Schubkräfte auslöst, als eine linienförmige Einklemmung durch eine V-förmige Erhöhung bzw. eine Sicke im Becherboden. Da die hydrophobe, am Becherboden anliegende Schicht der Luftelektrode und die katalytisch aktive Schicht sowie das metallische Ableiternetz gut aneinanderhaftend miteinander verbunden sind, führen bei der Bördelung auftretende Schubkräfte leicht zu Rissen in der Luftkathode und damit zu Undichtigkeiten der Zelle.

Neben diesen Ausführungsformen von Zink/Luft-Zellen ist es auch bekannt, gemäß der US-PS 4,404,266 zur Abstützung der Luftelektrode einen aus Kunststoff bestehenden, elastisch deformierbaren Ring im Zellboden vorzusehen. Auch hider hat sich allerdings gezeigt, daß beim Zusammenbau der Zelle die Deformierbarkeit dieses Ringes außerordentlich nachteilig ist, da beim Zusammenbördeln die Geometrie im Klemmbereich verändert wird und damit Schubbewegungen freiwerden. Erst Kunststoffringe aus beispielsweise Polyester, Polystyrol und PVC mit einer Dicke von ca. 0,35 - 0,4 mm sind so steif, daß sie sich nicht nach innen verformen und damit eine Verformung und ein Reißen der dünnen Luftkathode nach sich ziehen. Bei solchen Dicken des Kunststoffringes wird jedoch sehr viel Raum benötigt und daher die Kapazität der Zelle verringert.

Der Erfindung liegt daher die Aufgabe zugrunde, eine Luftsauerstoffzelle der beschriebenen Gattung anzugeben, bei der eine einwandfreie Abstützung und Abdichtung der Luftkathode gegeben ist und bei der gewährleistet ist, daß insbesondere beim Bördeln der Zelle keine Verwerfungen der dünnen Luftsauerstoffelektrode auftreten können, die zu Undichtigkeiten führen.

Diese Aufgabe wird gemäß der Erfindung bei der eingangs beschriebenen Luftsauerstoffzelle dadurch gelöst, daß der auf dem Becherboden angeordnete Ring ein Metallring ist. Dieser Metallring kann in den Becherboden eingeklebt sein, er kann aber auch vorzugsweise vor seinem Einbau bereits mit einem weichen Kunststoff beschichtet sein. Zweckmäßigerweise ist sein Außendurchmesser etwas geringer, beispielsweise 0,1 mm - 0,5 mm geringer, als der Innendurchmesser des Zellenbechers. Seine Dicke sollte zwischen ca. 0,15 mm und 0,30 mm liegen, während die der Abdichtung dienende Kunststoffschicht eine Dicke von ca. 0,02 bis 0,1 mm besitzt.

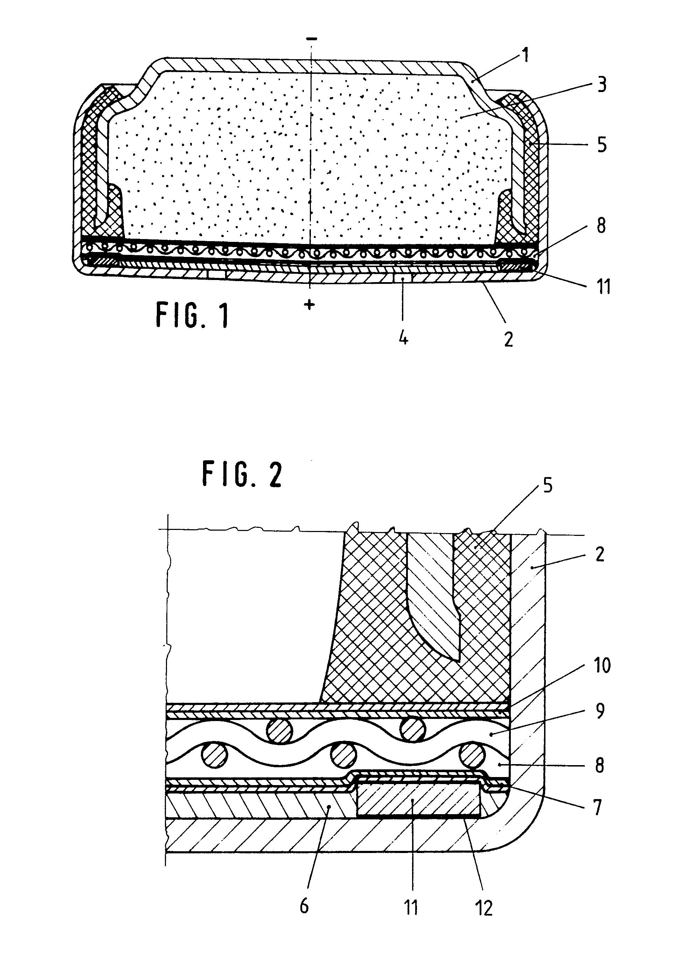

Im folgenden ist der Gegenstand der Erfindung anhand der Figuren näher erläutert, daßei zeigt Figur 1 einen Querschnitt durch eine erfindungsgemäße Luftsauerstoffzelle, Figur 2 zeigt einen Teil dieses Querschnitts in vergrößerter Darstellung.

Die Zelle besitzt einen inneren Metallbecher 1, welcher die negative Elektrode 3, im allgemeinen eine Zinkpulverelektrode, welche mit Elektrolyt getränkt ist, aufnimmt. Dieser innere Zellenbecher 1 wird von einem äußeren Zellenbecher 2 umgriffen, der Luftzuführungsöffnungen 4 besitzt. Zwischen innerem und äußerem Metallbecher ist eine isolierende Dichtung 5 angeordnet.

Die Luftsauerstoffelektrode selbst besteht aus mehreren Schichten. Sie besitzt eine katalytische aktive Schicht 8, die als Katalysatormasse üblicherweise ein Gemisch aus Ruß oder Aktivkohle mit PTFE-Pulver als Bindemittel enthält, wobei die Aktivkohle gegebenenfalls noch mit Mangandioxid oder Silber oder anderen metallischen Katalysatoren katalysiert werden kann. Dieses Gemisch ist in ein Metallnetz 9, beispielsweise aus Nickel eingepreßt oder eingewalzt. Dieses Metallnetz 9 dient gleichzeitig als Stromkollektor und Ableiter und steht mit dem äußeren Zellenbecher 2 in Verbindung. Auf der der negativen Zinkelektrode 3 zugewandten Seite ist auf die Katalysatorschicht 8 eine Separatorschicht 10 aus mikroporösem Polypropylen oder aus einem oder mehreren Zellulosefilmen aufgebracht, die mit der Katalysatorschicht 8 verklebt sein kann oder gegebenenfalls auch getrennt eingelegt wird. Auf der Luftzutrittsseite ist auf die Katalysatorschicht zumindest eine Schicht 7 aus ungesintertem PTFE aufgebracht, bei der dargestellten Ausführungsform einer Zelle sind zwei derartige Schichten vorgesehen. Diese Schicht 7, die ein Durchtreten des Elektrolyten verhindert und andererseits den Durchtritt des Gases zur katalytisch aktiven Schicht ermöglicht, ist mit der katalytisch aktiven Schicht 8 fest verbunden. Auf der Gasseite ist vor dieser hydrophoben Schicht eine Gasverteilungsschicht 6 angeordnet, die aus beispielsweise Filterpapieren, Faservliesen oder Geweben bestehen kann.

Zur Abstützung der Luftsauerstoffelektrode ist in den äußeren Zellenbecher 2 ein metallischer Ring 11 eingebracht. Dieser Ring 11 ist mit dem Boden des Bechers 2 durch die Schicht 12 elektrolytdicht verbunden. An seiner oberen Fläche liegt die Luftsauerstoffelektrode an, deren aus ungesintertem PTFE bestehende gasseitige Schicht 7 beim Bördelvorgang fest gegen den Ring 11 gepreßt wird.

Der aus beispielsweise Nickel-oder Stahlblech bestehende Metallring ist an seiner Unterseite mit dem Zellenbecher dicht verbunden. Diese elektrolytdichte Verbindung kann dadurch erfolgen, daß in den Becherboden vor dem Einbringen des Ringes eine Klebstoffschicht aus beispielsweise Kunstkautschuk. Polyisobutylen oder Fettsäurepolyamid eingebracht wird, oder der Ring selbst kann aus einem einseitig mit einem weichen Kunststoff beschichteten Material bestehen. Der Kunststoff, mit dem der Ring beschichtet ist, muß dabei so beschaffen sein, daß er sich gut den Rauhigkeiten des Becherbodens anpassen kann, um so eine ausreichende Dichtigkeit zu garantieren. Geeignete Materialien für diese weiche Kunststoffschicht sind beispielsweise weich eingestellte Epoxidharz-Heißschmelzfolien, Heißschmelzpolyamid, Ethylenterpolymer, Weiche Folien, die auf ein Metall aufgeklebt werden können, bestehen zum Beispiel aus Polyäthylen, Weich-PVC und PTFE. Derartige Schichten können auch auf eine Metallfolie aufgeschmolzen, aufgestrichen oder wie bei PTFE aufgesintert werden und danach können aus einem derartigen mehrschichtigen beschichteten Material die erfindungsgemäßen Metallringe hergestellt werden. Die Dicke des Metallrings sollte bei ca. 0,15 bis 0,3 mm liegen. Metallbleche dieser Dicke werden mit den angegebenen Folien aus weichem Kunststoff in einer Dicke von 0,02 bis 0,1 mm zusammenlaminiert. Vorzugsweise liegt die Dicke der Kunststoffschicht bei ca. 0,03 bis 0,05 mm. Da schon Metallringe mit einer Dicke von nur beispielsweise 0,15 mm ausreichend steif sind, um sich beim Bördelvorgang nicht zu verformen, ist es möglich, die Ringdicke sehr gering zu wählen, so daß der Raum für die Luftverteilung 6 außerordentlich gering ist, was der Kapazität der Zelle zugute kommt.

Dadurch, daß der Metallring 11 in seinem Außendurchmesser etwa 0,1 bis 0,5 mm kleiner ist als der Innendurchmesser des Bechers 2, wird gewährleistet, daß eine gleichmäßige Pressung an allen Stellen des Ringes erfolgt. Der erfindungsgemäße Metallring mit einer Beschichtung aus einem weichen Kunststoff kann bei der Herstellung der Zelle beispielsweise direkt in den Zellenbecher 2 eingestanzt werden, so daß auch fertigungstechnisch kein erhöhter Aufwand auftritt. Es hat sich gezeigt, daß Zellen mit der erfindungsgemäßen Abdichtung praktisch keine Undichtigkeiten aufweisen und daß insbesondere Verwerfungen und damit Undichtigkeiten der Luftsauerstoffelektrode, die beim Bördelvorgang bekannter Zellen häufiger auftreten, durch diese Konstruktion vermieden werden.

## Ansprüche

1. Luftsauerstoffzelle in Knopfform, bestehend aus einem den Elektrolyten und das negative Elektrodenmaterial aufnehmenden inneren Metallbecher und einem die Luftsauerstoffelektrode enthaltenden äußeren Metallbecher, die unter Zwischenlage einer isolierenden Dichtung zusammengefügt sind und bei der der Rand der Luftsauerstoffelektrode auf einem in den Becherboden eingelegten und mit dem Becherboden elektrolytdicht verbundenen Ring abgestützt ist, dadurch gekennzeichnet, daß der Abstützring ein Metallring (11) ist.

2. Luftsauerstoffzelle nach Anspruch 1, dadurch gekennzeichnet, daß der Metallring (11) auf der dem Becherboden zugewandten Seite mit einem weichen Kunststoff (12) beschichtet ist.

3. Luftsauerstoffzelle nach Anspruch 2, dadurch gekennzeichnet, daß der Metallring (11) mit einem Heißschmelzkleber (12) beschichtet ist.

4. Luftsauerstoffzelle nach den Ansprüchen 1 bis 3, dadurch gekennzeichnet, daß der Außendurchmesser des Metallrings (11) ca. 0,1 bis 0,5 mm kleiner ist als der Innendurchmesser des Bechers (2).

5. Luftsauerstoffzelle nach den Ansprüchen 1 bis 4, dadurch gekennzeichnet, daß der Metallring 0,15 bis 0,3 mm dick ist und daß die Kunststoffschicht eine Dicke von 0,02 bis 0,1 mm besitzt.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | PATENT ABSTRACTS OF JAPAN, Band 8, Nr. 44 (E-229)[1481], 25. Februar 1984; & JP-A-58 198 872 (MATSUSHITA DENKI SANGYO K.K.) 18-11-1983 * Insgesamt * --- | 1,2,5 | H 01 M 12/06 |
| Y | US-A-4 066 822 (F.J. PRZYBYLA et al.) * Spalte 1, Zeile 67 - Spalte 2, Zeile 46 * --- | 1,2,5 | |
| D,Y | US-A-4 404 266 (N.J. SMILANICH) * Spalte 3, Zeilen 12-29; Spalte 6, Zeile 49 - Spalte 7, Zeile 30; Spalte 8, Zeilen 14-32 * --- | 1,2,5 | |
| A | PATENT ABSTRACTS OF JAPAN, Band 7, Nr. 107 (E-174)[1252], 11. Mai 1983; & JP-A-58 30 065 (MATSUSHITA DENKI SANGYO K.K.) 22-02-1983 * Insgesamt * --- | 1-3 | |
| A | PATENT ABSTRACTS OF JAPAN, Band 9, Nr. 197 (E-335)[1920], 14. August 1985; & JP-A-60 63 880 (MATSUSHITA DENKI SANGYO K.K.) 12-04-1985 * Insgesamt * --- | 1 | **RECHERCHIERTE SACHGEBIETE (Int. Cl.4)** <br><br> H 01 M 12/06 |
| A | US-A-4 118 544 (F.J. PRZYBYLA et al.) * Spalte 4, Zeile 55 - Spalte 5, Zeile 2 * --- | 1 | |
| A | PATENT ABSTRACTS OF JAPAN, Band 9, Nr. 178 (E-330)[1901], 23. Juli 1985; & JP-A-60 49 578 (MATSUSHITA DENKI SANGYO K.K.) 18-03-1985 * Insgesamt * ----- | 1 | |

Der vorliegende Recherchenbericht wurde für alle Patentansprüche erstellt

| Recherchenort | Abschlußdatum der Recherche | Prüfer |
|---|---|---|
| DEN HAAG | 10-08-1988 | DE VOS L.A.R. |